(19) **Europäisches Patentamt**

**European Patent Office**

**Office européen des brevets**

(11) Numéro de publication : **0 441 269 B1**

(12) **FASCICULE DE BREVET EUROPEEN**

(45) Date de publication du fascicule du brevet :
**24.05.95 Bulletin 95/21**

(51) Int. Cl.⁶ : **H02N 1/00**

(21) Numéro de dépôt : **91101394.4**

(22) Date de dépôt : **02.02.91**

(54) **Micromoteur électrostatique.**

(30) Priorité : **09.02.90 CH 415/90**
**23.02.90 FR 9002386**

(43) Date de publication de la demande :
**14.08.91 Bulletin 91/33**

(45) Mention de la délivrance du brevet :
**24.05.95 Bulletin 95/21**

(84) Etats contractants désignés :
**CH DE FR GB LI NL**

(56) Documents cités :
**DE-A- 2 730 041**
**SENSORS AND ACTUATORS vol. 20, no. 1/2,**
**15 novembre 1989, Lausanne CH, Elsevier**
**Sequoia NL, pp. 17-24 ; W. TRIMMER et al.:**
**"Harmonic Electrostatic Motors"**

(56) Documents cités :
**PATENT ABSTRACTS OF JAPAN vol. 12, no.**
**335 (E-656)(3182), 9 septembre 1988 ; & JP-**
**A-63 95 867**
**SENSORS AND ACTUATORS vol. 20, no. 1/2,**
**15 novembre 1989, Lausanne CH, Elsevier**
**Sequoia NL, pp. 25-32 ; W.C. TANG et al.:**
**"Laterally Driven Polysilicon Resonant**
**Microstructures"**

(73) Titulaire : **ASULAB S.A.**
**Faubourg du Lac 6**
**CH-2501 Bienne (CH)**

(72) Inventeur : **Lionel, Paratte**
**Grand-rue 13**
**CH-2000 Neuchâtel (CH)**

(74) Mandataire : **de Montmollin, Henri et al**
**ICB**
**Ingénieurs Conseils en Brevets SA**
**Rue des Sors 7**
**CH-2074 Marin (CH)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet un micromoteur électrostatique comportant un rotor ayant un moyeu et une zone périphérique, un stator comprenant des électrodes coplanaires disposées en regard de ladite zone périphérique et destinées à produire un champ électrique entre ledit stator et ledit rotor, et des moyens pour relier rotativement ledit moyeu du rotor audit stator.

Tous les micromoteurs qui seront mentionnés ci-dessous, y compris le micromoteur selon l'invention, sont fabriqués dans des plaquettes de silicium ou d'un autre matériau ayant des caractéristiques semblables à l'aide de procédés dérivés de ceux qui sont utilisés pour fabriquer des circuits intégrés, et qui sont bien connus.

Des exemples de procédés de fabrication de ces micromoteurs sont décrits, notamment, dans le brevet US-A-4 740 410, dans le compte-rendu de la conférence intitulée "IC-Processed Electrostatic Micro-motors" faite par MM. L.-S. Fan et al. au Congrès sur les dispositifs électriques intégrés (IEEE Integrated Electrical Devices Meeting) qui s'est tenu du 11 au 14 décembre 1988 à San Francisco (USA) et dans le compte-rendu de la conférence intitulée "IC-Processed Micro-motors : Design, Technology and Testing" faite par MM. Y.-C. Tai et al. au Congrès sur les microsystèmes électromécaniques (IEEE Micro-Electro-Mechanical Systems Meeting) qui s'est tenu à Salt-Lake City (USA) du 20 au 22 février 1989.

Ces procédés ne seront donc pas décrits à nouveau ici, même s'ils peuvent légèrement différer les uns des autres selon la constitution particulière de ces micromoteurs. On rappellera simplement que tous ces procédés comportent une étape d'élimination par gravure chimique d'une couche sacrificielle, cette élimination étant destinée à séparer le rotor du stator et à permettre à ce rotor de tourner librement par rapport à ce stator.

Les compte-rendus des conférences mentionnées ci-dessus décrivent des micromoteurs comportant un rotor plat en forme de croix à quatre ou huit branches réunies par un moyeu central et un stator comprenant six ou douze électrodes de commande disposées en cercle autour de ce rotor et dans le même plan que celui-ci.

Les moyens de liaison du rotor au stator comportent une ouverture cylindrique percée dans le moyeu central et un pivot faisant partie du stator et engagé dans cette ouverture.

Pour faire tourner le rotor de ce moteur, on soumet chaque bras de celui-ci à une force tangentielle produite par un champ électrique créé par une tension appliquée à certaines des électrodes de commande.

Mais ce champ électrique soumet également les bras du rotor à des forces radiales. Si les extrémités de ces bras étaient toujours toutes rigoureusement à la même distance des électrodes de commande, ces forces radiales se compenseraient deux à deux et leur résultante sur le rotor serait nulle.

Mais, il est évidemment impossible de fabriquer un tel moteur en respectant cette condition, puisque, notamment, il doit exister un certain jeu entre le moyeu du rotor et le pivot fixe du stator pour que ce rotor puisse tourner autour de ce pivot.

Les distances entre les extrémités de deux bras diamétralement opposés et les électrodes de commande sont donc toujours différentes, et les forces radiales qui s'exercent sur ces bras, et qui sont inversément proportionnelles au carré de ces distances, ne se compensent pas. Le rotor est donc également soumis à une force radiale résultante qui provoque un frottement de la paroi interne de l'ouverture de son moyeu contre le pivot fixe traversant cette ouverture.

Ce frottement réduit évidemment le couple utile que peut fournir le moteur, et peut même empêcher toute rotation de son rotor. En outre, l'effet de ce frottement ne peut pas être compensé par une augmentation de la tension appliquée aux électrodes de commande, car une telle augmentation aurait pour effet d'accroître la force radiale exercée sur le rotor, et donc d'accroître également le frottement mentionné ci-dessus.

Divers types de moteurs ne présentant pas cet inconvénient sont décrits dans un article intitulé "Harmonic Electrostatic Motors" écrit par MM. W. Trimmer et R. Jebens et paru dans le numéro 20 (1989) du 15 novembre 1989 de la revue "Sensors and Actuators" éditée par la Société Elsevier Sequoia (Pays-Bas).

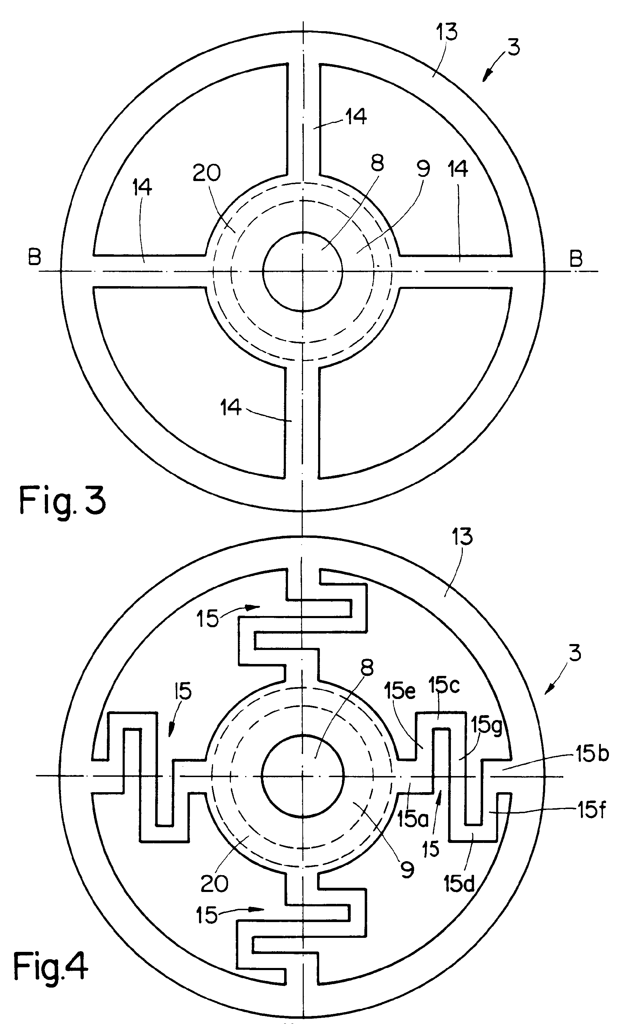

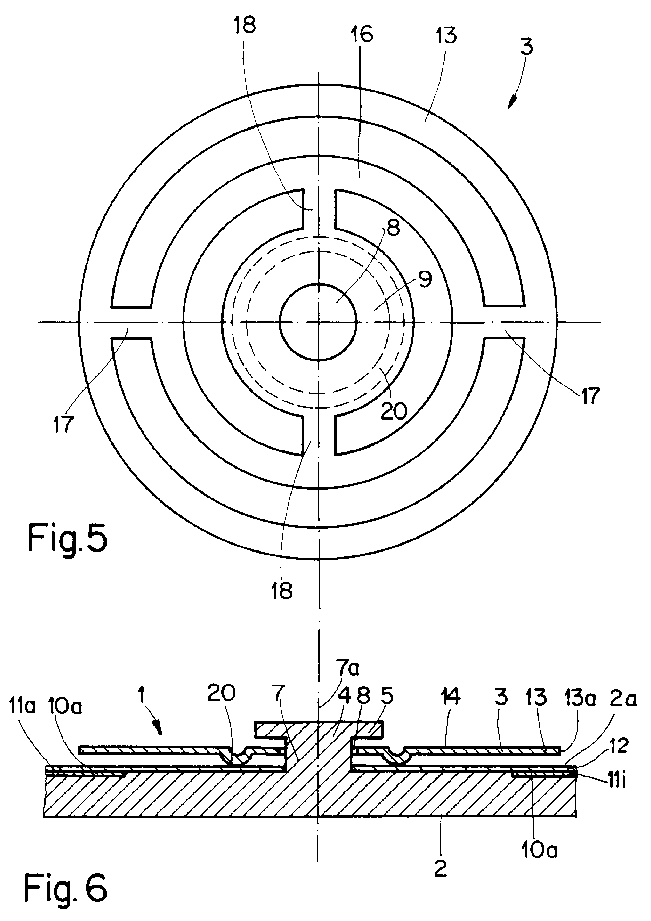

Un de ces moteurs, illustré schématiquement par les figures 4 et 5 de cet article, comporte un stator plan muni d'électrodes de commande et un rotor ayant la forme d'un disque plein circulaire qui, en l'absence de tension sur les électrodes du stator, est également plan et en outre parallèle au stator.

Les moyens de liaison de ce rotor au stator comportent un pivot faisant partie du rotor et certainement, bien que cela ne soit pas représenté, un palier fixé au stator et dans lequel ce pivot est destiné à tourner.

Les électrodes du stator sont alimentées successivement et cycliquement de manière que les points de la périphérie du rotor touchent l'un après l'autre des points du stator situés sur un cercle dont le diamètre est inférieur au diamètre du rotor.

Il en résulte que le rotor tourne autour de son axe dans le même sens que celui dans lequel le point de contact entre ce rotor et le stator parcourt le cercle mentionné ci-dessus.

La force électrostatique qui attire un des points de la périphérie du rotor de ce moteur contre le stator est évidemment sensiblement perpendiculaire au plan de ce dernier et n'a donc pratiquement pas de composante radiale, ce qui est un avantage par rapport aux autres moteurs électrostatiques décrits ci-dessus.

Mais cette force èlectrostatique crée un couple de basculement qui tend à faire tourner le plan du rotor autour d'une droite perpendiculaire à l'axe de rotation de ce rotor et à la droite joignant le centre de ce dernier au point d'application de cette force.

Comme ce rotor présente forcément une certaine rigidité, ce couple de basculement provoque également une augmentation du frottement entre le pivot du rotor et son palier.

La déposante a constaté que, bien que le rotor de ce moteur soit qualifié de "souple" dans l'article mentionné ci-dessus, il présente, à cause de sa forme de disque plein, une rigidité telle que ce frottement dû à ce couple de basculement est assez important pour diminuer sensiblement le couple qui peut être fourni par ce moteur. En outre, l'élimination par gravure chimique de la couche sacrificielle, élimination qui permet de séparer le rotor de ce moteur de son stator, est rendue très difficile, voire même impossible, à cause de cette forme de disque plein de ce stator.

Le document DE-A-2 730 041 décrit un moteur dont le stator présente également une surface plane et dont le rotor a également la forme générale d'un disque circulaire sensiblement parallèle à la surface plane du stator lorsque le moteur n'est pas alimenté. En outre, les points de la périphérie du rotor sont également attirés successivement contre le stator pour provoquer la rotation de ce rotor.

Mais ce moteur ne présente aucune autre similitude avec celui qui est décrit dans l'article de la revue "Sensors and Actuators" mentionné ci-dessus, car il s'agit d'un moteur électromagnétique, et non pas électrostatique, la force qui attire la périphérie du rotor contre le stator étant produite par des électroaimants faisant partie de ce stator et ce moteur ne pouvant donc absolument pas être fabriqué en utilisant un procédé semblable à ceux qui sont utilisés pour fabriquer des circuits intégrés.

Un but de la présente invention est de proposer un micromoteur électrostatique du même genre que celui qui est décrit dans l'article de la revue "Sensors and Actuators" mentionné ci-dessus, mais dans lequel le frottement entre la partie mobile et la partie fixe des moyens de liaison du rotor au stator soit nettement plus faible, le couple fourni par le micromoteur de cette invention étant ainsi, toutes autres choses étant égales, nettement plus important, et dont la fabrication, notamment l'élimination par gravure chimique de la couche sacrificielle destinée à séparer son rotor de son stator, soit beaucoup plus simple.

Ce but est atteint par le micromoteur électrostatique dont les caractéristiques sont énumérées dans la revendication 1 annexée.

Le micromoteur de la présente invention va être décrit en détail ci-dessous à l'aide du dessin annexé qui représente, à titre d'exemple non limitatif, diverses formes d'exécution de ce micromoteur.

Dans ce dessin, où les mêmes références désignent des éléments analogues :

- la figure 1 est une coupe transversale schématique d'une forme d'exécution du micromoteur selon l'invention;
- la figure 2 est une vue en plan schématique du stator du micromoteur de la figure 1;
- les figures 3, 4 et 5 sont des vues schématiques en plan de trois formes d'exécution du rotor du micromoteur selon l'invention; et
- la figure 6 est une coupe transversale schématique d'une autre forme d'exécution du micromoteur selon l'invention.

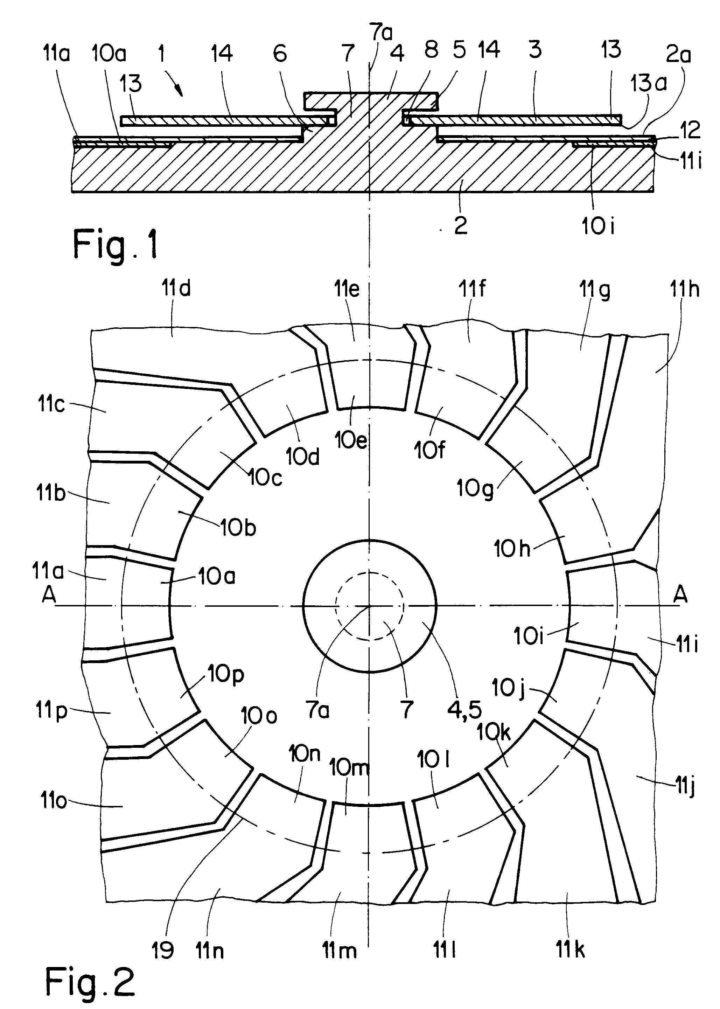

Il faut noter que les épaisseurs des divers éléments des moteurs représentés aux figures 1 et 6 ont été fortement exagérées par rapport aux autres dimensions de ces éléments pour faciliter la compréhension de ces figures.

Le micromoteur selon l'invention représenté en coupe schématique à la figure 1 avec la référence 1 comporte un stator 2 et un rotor 3.

Dans la forme d'exécution représentée par cette figure 1, 1e stator 2 est sensiblement plat, sauf en son centre où est disposé un pivot 4.

Ce pivot 4 est d'une seule pièce avec le stator 2 et comprend deux butées 5 et 6 séparées par une portion cylindrique 7 ayant un axe 7a, qui est engagée dans une ouverture 8, également cylindrique, que comporte le moyeu 9 du rotor 3 (voir les figures 3 à 5).

Le diamètre de l'ouverture 8 ménagée dans le moyeu 9 est légèrement supérieur à celui de la portion cylindrique 7 et inférieur à celui des butées 5 et 6.

Le rotor 3 peut donc tourner autour de la portion cylindrique 7 du pivot 4, et il est retenu axialement par les butées 5 et 6.

Dans une autre forme d'exécution du moteur 1, représentée schématiquement par la figure 6, le pivot 4 ne comporte pas de butée 6, et le rotor 3 comporte une nervure circulaire 20 qui s'appuie sur la face 2a du stator 2 et maintient le moyeu 9 à une certaine distance de cette face 2a.

Cette nervure 20, qui a été également représentée, en traits interrompus, aux figures 3, 4 et 5, pourrait être remplacée par des bossages séparés les uns des autres s'appuyant sur la face 2a du stator 2 et remplissant le même office que cette nervure 20. Une forme d'exécution comportant de tels bossages n'a pas été représentée.

Le stator 2 comporte en outre, dans cet exemple, seize électrodes de commande 10a à 10p disposées en un cercle concentrique à la portion cylindrique 7 du pivot 4. Ces électrodes, qui seront appelées électrodes 10 dans la suite de cette description, sont toutes visibles dans la vue en plan du stator 2 représentée à la figure 2.

Il faut noter que, normalement, ces électrodes 10 ne sont pas complètement visibles, dans une vue en plan du moteur 1, car elles sont partiellement cachées par le rotor 3, comme cela sera décrit plus loin. La figure 2 représente donc le stator 2 d'un moteur 1 auquel on a enlevé son rotor 3.

Il faut en outre noter que la coupe transversale du stator 2 représentée par la figure 1 est faite selon l'axe A-A de la figure 2, et que la coupe transversale du rotor 3 également représentée par la figure 1 est faite selon l'axe B-B de la figure 3 qui sera décrite plus loin.

Les électrodes 10 sont électriquement isolées les unes des autres et reliées individuellement à un circuit de commande, dont des exemples seront décrits plus loin, par des pistes conductrices 11a à 11p.

Ces électrodes 10 sont recouvertes d'une mince couche d'isolation 12 qui est plane, au moins dans la zone de ces électrodes 10, et dont la face tournée vers le rotor 3 constitue la face 2a du stator 2.

Comme on le verra plus loin, le rotor 3 est sensiblement plat et parallèle à la face 2a du stator 2 lorsque le moteur 1 ne fonctionne pas, c'est-à-dire lorsqu'aucune tension n'est appliquée à l'une ou à l'autre des électrodes 10. En outre, ce rotor 3 est maintenu à une certaine distance de cette face 2a par la butée 6 du pivot 4.

Les figures 3, 4 et 5 représentent diverses formes d'exécution du rotor 3. Il faut noter que, normalement, le moyeu 9 de ce rotor 3 n'est pas entièrement visible dans une vue en plan du moteur 1, car la partie centrale de ce moyeu 9 et l'ouverture 8 qui y est ménagée sont cachées par la butée 5 située à l'extrémité du pivot 4.

Dans toutes ses formes d'exécution, et notamment dans celles qui sont représentées à titre d'exemples non limitatifs par les figures 3, 4 et 5, le rotor 3 comporte un anneau circulaire périphérique 13 concentrique au moyeu 9 et relié à ce dernier par des éléments de liaison qui seront décrits plus loin.

L'anneau périphérique 13 est disposé de manière que, dans une vue en plan du moteur 1, il recouvre au moins partiellement les électrodes 10. Pour une raison qui sera rendue évidente par la suite de cette description, cet anneau 13 est même de préférence disposé de manière qu'il soit entièrement situé en regard des électrodes 10, toujours dans une vue en plan du moteur 1.

Pour des raisons qui seront également rendues évidentes par la suite de cette description, et aussi dans toutes les formes d'exécution du rotor 3, l'anneau 13 doit pouvoir supporter toutes les forces qui lui sont appliquées pendant le fonctionnement du moteur sans subir de déformation notable. En outre, les éléments de liaison de l'anneau 13 au moyeu 9 doivent être conformés de manière à se déformer facilement lorsqu'une force est appliquée en un point de l'anneau 13 dans une direction sensiblement perpendiculaire au plan des électrodes 10, pour que, en réponse à cette force, le plan de l'anneau 13 puisse facilement basculer autour d'une droite sensiblement perpendiculaire à l'axe 7a de la portion cylindrique 7 du pivot 4 et au rayon de cet anneau 13 passant par le point d'application de cette force.

Ces éléments de liaison de l'anneau 13 au moyeu 9 doivent cependant être suffisamment rigides pour qu'ils ne se déforment pas sensiblement sous leur propre poids et sous celui de l'anneau 13, ou au moins pour que cet anneau 13 ne touche pas le stator 2 lorsque le moteur 1 ne fonctionne pas, c'est-à-dire lorsqu'aucune tension électrique n'est appliquée aux électrodes 10, et ceci quelle que soit l'orientation du moteur 1 par rapport à l'horizontale.

Dans la forme d'exécution du rotor 3 représentée à la figure 3, ces éléments de liaison comportent quatre bras radiaux rectilignes 14 répartis régulièrement autour du moyeu 9. Deux de ces bras 14 sont visibles, en coupe, dans la figure 1 qui, comme cela a déjà été mentionné, représente le moteur 1 dans un cas où il est équipé du rotor 3 de la figure 3.

On voit que les conditions mentionnées ci-dessus sont remplies lorsque les bras 14 ont des dimensions telles qu'ils présentent une faible résistance aux efforts de flexion qu'ils subissent lorsque la force mentionnée ci-dessus est appliquée a l'endroit où ils sont reliés à l'anneau 13, ainsi qu'une faible résistance aux efforts de torsion qu'ils subissent en réponse à cette force lorsque la direction de leur longueur est confondue avec la droite, mentionnée ci-dessus, autour de laquelle le plan de l'anneau 13 doit pouvoir basculer.

Dans la forme d'exécution du rotor 3 représentée par la figure 4, les éléments de liaison de l'anneau 13 et du moyeu 9 comportent également quatre bras répartis régulièrement autour du moyeu 9, qui sont désignés dans ce cas par la référence 15.

Ces bras 15 ne sont pas rectilignes mais comportent, chacun, deux tronçons terminaux 15a et 15b reliés respectivement au moyeu 9 et à l'anneau 13 et alignés radialement l'un avec l'autre, deux tronçons intermédiaires 15c et 15d parallèles aux tronçons 15a et 15b mais disposés à une certaine distance de part et d'autre de ces derniers, et trois tronçons de liaison 15e, 15f et 15g perpendiculaires aux précédents et reliant respectivement les tronçons 15a et 15c, 15b et 15d, et 15c et 15d.

On voit à nouveau que les dimensions des différents tronçons 15a à 15g des bras 15 peuvent être facilement choisies de manière que ces derniers présentent les caractéristiques mentionnées ci-dessus.

On voit également que, toutes autres choses étant égales, la forme des bras 15 du rotor 3 de la figure 4 permet de donner à ces bras 15 une résistance aux efforts de flexion et de torsion qu'ils subissent en réponse à une force appliquée en un point de l'anneau 13 dans une direction perpendiculaire au plan du rotor 3 qui est plus faible que celle qu'on peut donner aux bras 14 du rotor 3 de la figure 3.

Mais on voit également que cette forme des bras 15 du rotor 3 de la figure 4 a comme conséquence que leur résistance à la flexion dans les directions parallèles au plan de ce rotor 3 est moins grande que celle des bras 17 du rotor 3 de la figure 3.

Cependant, comme cela sera rendu évident plus loin, une faible résistance des éléments de liaison de l'anneau 13 avec le moyeu 9 aux efforts de flexion et de torsion mentionnés ci-dessus est plus importante pour un bon fonctionnement du moteur 1 qu'une grande résistance à la flexion de ces éléments dans les directions parallèles à ce plan. La forme d'exécution représentée par la figure 4 est donc plus favorable, de ce point de vue, que celle qui est représentée par la figure 3.

Dans la forme d'exécution du rotor 3 représentée par la figure 5, les éléments de liaison de l'anneau périphérique 13 et du moyeu 9 comportent un anneau intermédiaire 16 concentrique à l'anneau périphérique 13 et au moyeu 9 et relié respectivement à ces derniers par une première paire de bras rectilignes 17 et par une deuxième paire de bras 18. Les deux bras 17 et les deux bras 18 sont disposés sur un premier et, respectivement, sur un deuxième diamètre du rotor 3, ces deux diamètres étant perpendiculaires l'un à l'autre.

On voit facilement que, dans cette forme d'exécution également, il est aisé de donner aux divers composants de ces éléments de liaison des dimensions telles que ces éléments de liaison présentent les caractéristiques mentionnées ci-dessus.

Il est évident qu'il existe de très nombreuses autres formes d'exécution du rotor 3 dans lesquelles les éléments de liaison de l'anneau 13 au moyeu 9 présentent aussi les caractéristiques voulues. Ces autres formes d'exécution ne seront pas décrites ici car leur réalisation découle aisément de celle des formes d'exécution des figures 3, 4 et 5.

Ainsi, par exemple, ces éléments de liaison peuvent comporter plus ou moins de quatre bras semblables aux bras 14 et 15 des figures 3 et, respectivement 4, et même n'en comporter qu'un seul.

Toujours par exemple, ces moyens de liaison peuvent comporter quatre bras respectivement semblables aux bras 17 et aux bras 18 de la figure 5 et, à la place de l'anneau 16 de cette même figure, deux portions d'anneau symétriques l'une de l'autre par rapport au centre du rotor 3 et reliant chacune l'un des bras semblables aux bras 17 à l'un des bras semblables aux bras 18. Ces moyens de liaison pourraient même ne comporter que deux bras semblables l'un à l'un des bras 17 et l'autre à l'un des bras 18, reliés par une seule portion d'anneau intermédiaire.

On voit que, dans toutes ses formes d'exécution, le rotor 3 du micromoteur selon la présente invention est percé d'ouvertures délimitées par l'anneau péripérique 13, le moyeu 9 et les éléments de liaison de cet anneau 13 à ce moyeu 9. La présence de ces ouvertures rend l'élimination par gravure chimique de la couche sacrificielle, élimination qui doit être réalisée pendant la fabrication du micromoteur pour séparer son rotor de son rotor, beaucoup plus facile que dans le cas du micromoteur décrit par l'article de MM. W. Trimmer et R. Jebens mentionné ci-dessus dont le rotor a la forme d'un disque plein et ne comporte aucune ouverture.

En ce qui concerne le fonctionnement du moteur 1, toutes les formes d'exécution du rotor 3 sont pratiquement équivalentes. De même, il est pratiquement indifférent pour ce fonctionnement que le moyeu 9 du rotor 3 soit maintenu à une certaine distance de la face 2a du stator 2 par la butée 6 de la figure 1 ou par la nervure 20 de la figure 6.

Pour ne pas compliquer inutilement la description de ce fonctionnement qui va suivre, il ne sera donc pas fait spécialement référence à l'une ou l'autre de ces formes d'exécution, mais simplement au rotor 3, et cette description sera limitée au cas de la figure 1.

On considérera tout d'abord le cas où le rotor 3 du moteur 1 est réalisé en un matériau électriquement conducteur, par exemple du silicium polycristallin, où le pivot 4 du stator 2 est également en un matériau électriquement conducteur, qui peut être également du silicium polycristallin, et où ce pivot 4 est relié électriquement, par exemple, par une connexion noyée dans la matière du stator 2, à une première borne de la source d'alimentation électrique du dispositif formé par le moteur 1 et son circuit de commande.

Dans ce cas, le rotor 3, dont le moyeu 9 est toujours en contact avec le pivot 4, est donc également relié à cette première borne de cette source d'alimentation. Le cas échéant, la surface externe du pivot 4 et/ou du rotor 3 peut être recouverte d'une couche mince d'un matériau bon conducteur de l'électricité, tel qu'un métal, pour améliorer le contact électrique entre le pivot 4 et le rotor 3.

Le circuit de commande du moteur 1 est agencé dans ce cas de manière à relier successivement et sélectivement chacune des électrodes 10 à la deuxième borne de la source d'alimentation du dispositif lorsque ce moteur 1 doit fonctionner.

Admettons pour commencer que ce circuit de commande relie l'électrode 10a à cette deuxième borne de la source d'alimentation.

En réponse à la tension de commande ainsi appliquée entre le rotor 3 et cette électrode 10a, cette dernière et la portion de l'anneau 13 qui lui fait face sont soumises à une force électrostatique produite par le champ électrique créé par cette tension et qui tend à attirer cette portion de l'anneau 13 contre cette électrode 10a.

Si la tension de commande dont résulte cette force est suffisante, cette dernière soumet l'anneau 13 à un couple de basculement qui fait tourner son plan autour d'une droite sensiblement perpendiculaire à l'axe 7a de la portion cylindrique 7 du pivot 4 et au rayon de cet anneau 13 passant par le point d'application de cette force. En réponse à ce couple de basculement, un point de l'arête 13a de l'anneau 13 (figure 1) vient toucher la face 2a du stator 2 en regard de l'électrode 10a, grâce aux caractéristiques des éléments de liaison de cet anneau 13 au moyeu 9 du rotor 3 mentionnées ci-dessus.

Comme la surface 2a du stator 2 est constituée par la couche isolante 12, il n'y a pas de contact électrique entre l'anneau 13 et l'électrode 10a.

La surface de la zone de contact mécanique entre l'anneau 13 et la face 2a du stator 2 dépend évidemment de la dureté des matériaux en présence et de la force créée par le champ électrique, ainsi que de la flexibilité des éléments de liaison de l'anneau 13 au moyeu 9. Cette surface est cependant suffisamment petite pour qu'elle puisse être assimilée à un point qui sera appelé point de contact dans la suite de cette description.

Si maintenant le circuit de commande supprime la tension qu'il appliquait entre le rotor 3 et l'électrode 10a, la portion de l'anneau 13 qui était appuyée contre la face 2a du stator tend à reprendre sa position initiale en raison de l'élasticité des éléments de liaison de l'anneau 13 au moyeu 9.

Si en outre, en même temps qu'il supprime la tension entre le rotor 3 et l'électrode 10a, le circuit de commande applique une tension de même valeur entre le rotor 3 et l'électrode 10b, cette dernière et la portion de l'anneau 13 qui lui fait face sont à leur tour soumises à une force électrostatique qui provoque le déplacement du point de contact entre l'arête 13a de l'anneau 13 et la face 2a du stator 2 jusqu'à une nouvelle position située en regard de l'électrode 10b.

Pendant ce déplacement du point de contact, l'arête 13a de l'anneau 13 roule sur la face 2a du stator 2, à condition bien entendu que le couple résistant appliqué au rotor 3 ne soit pas trop élevé, et que la tension de commande soit appliquée entre l'électrode 10b et le rotor 3 exactement à l'instant où elle est supprimée entre l'électrode 10a et ce rotor 3, voire même légèrement avant cet instant.

Ce processus peut évidemment être poursuivi, le circuit de commande du moteur 1 appliquant successivement et individuellement une tension entre le rotor 3 et chacune des électrodes 10c, 10d, etc..

Il résulte de cette application successive de la tension de commande entre le rotor 3 et les électrodes 10 que l'arête 13a de l'anneau 13 roule sur la surface 2a du stator 2 et que le point de contact entre cette arête 13a et cette face 2a parcourt un cercle, qui a été représenté en trait interrompu dans la figure 2 avec la référence 19. Ce cercle 19 sera appelé cercle de roulement dans la suite de cette description.

Dans l'exemple qui vient d'être décrit, le point de contact décrit ce cercle de roulement 19 dans le sens défini par l'ordre alphabétique des références des électrodes 10. Il est évident que ce sens de déplacement du point de contact le long de ce cercle de roulement 19 peut être inversé en changeant l'ordre dans lequel les électrodes 10 sont soumises à la tension de commande.

On voit facilement que le rayon de ce cercle de roulement 19 est inférieur au rayon du rotor 3, puisqu'il est donné, en première approximation, par la relation

$$r = \sqrt{R^2 - d^2}$$

où r est ce rayon du cercle 19, R est le rayon du rotor 3 et d est la distance entre l'anneau 13 et la face 2a du stator 2 en l'absence de tension sur les électrodes 10.

Il en découle évidemment que la circonférence du cercle de roulement 19 est plus courte que celle du rotor 3 et que, chaque fois que le point de contact fait un tour complet sur la face 2a du stator 2, il fait moins d'un tour sur l'arête 13a de l'anneau 13.

En d'autres termes, si l'on désigne par P1 le point de l'arête 13a qui est en contact avec la face 2a du stator 2 lorsque la tension de commande est appliquée à une électrode 10 déterminée, c'est un autre point P2 de cette arête 13a qui est en contact avec cette face 2a lorsque la même électrode est à nouveau soumise à cette tension de commande après que toutes les autres électrodes ont été successivement soumises à cette tension.

La distance entre ces points P1 et P2, sur l'arête 13a, est égale à la différence entre la longueur de la circonférence du rotor 3 et la longueur de la circonférence du cercle 19.

Par rapport au sens de rotation du point de contact sur le cercle 19, le point P1 est en avant du point P2. Le rotor 3 tourne donc autour du pivot 4 dans le même sens que le point de contact ou, en d'autres termes dans le même sens que celui dans lequel les électrodes 10 sont successivement soumises à la tension de commande. En outre, l'axe de rotation du rotor 3 est sensiblement confondu avec l'axe 7a de la partie cylindrique 7 du pivot 4.

On voit facilement que, quel que soit l'angle parcouru par le point de contact entre le rotor 3 et le stator 2, le rapport K entre cet angle et l'angle de rotation correspondant du rotor 3 autour du pivot 4 est donné par la relation :

$$K = \frac{r}{R-r}$$

dans laquelle r et R sont respectivement les rayons du cercle de roulement 19 et du rotor 3 déjà définis ci-dessus.

Comme la distance d qui sépare l'anneau 13 et la surface 2a du stator 2 en l'absence de tension sur les électrodes 10 et qui définit le rayon r par rapport au rayon R comme cela a été montré ci-dessus est généralement petite vis-à-vis de ce rayon R, le rapport K peut être très grand.

Ainsi, par exemple, la déposante de la présente demande a réalisé un moteur tel que celui des figures 1 et 2 dans lequel la distance d est de deux micromètres environ et le rayon R de 250 micromètres environ. Dans ce moteur, le rapport K est donc environ égal à 31'000.

Cela signifie que le circuit de commande du moteur doit réaliser environ 31'000 fois l'alimentation successive de toutes les électrodes 10 pour que le rotor 3 fasse un tour autour du pivot 4.

Comme cela a déjà été mentionné, la force électrostatique résultant de l'application d'une tension entre le rotor 3 et l'une des électrodes 10 n'a aucune composante radiale, c'est-à-dire dirigée selon un rayon du rotor 3, mais crée un couple de basculement qui fait tourner le plan de l'anneau 13 autour d'une droite sensiblement perpendiculaire à l'axe de rotation du rotor 3 et au rayon de cet anneau 13 passant par le point d'application de cette force.

Ce couple de basculement est égal, en première approximation tout au moins, au produit du rayon de l'anneau 13 par la force électrostatique qui est nécessaire pour que l'arête 13a de cet anneau 13 touche juste la face 2a du stator 2. Comme cette force est évidemment d'autant plus faible que le rotor est plus souple, on voit que, dans le cas du moteur selon l'invention, ce couple de basculement, et donc le frottement entre le moyeu 9 et le pivot 4 sont beaucoup plus faibles, et donc le couple utile que peut fournir ce moteur est nettement plus important, que dans le cas du moteur décrit dans l'article de MM. W. Trimmer et R. Jebens mentionné ci-dessus.

On notera que ce couple utile que peut fournir le moteur dépend directement de la valeur de la tension de commande appliquée entre les électrodes 10, l'une après l'autre, et le rotor 3, mais que le couple de basculement mentionné ci-dessus est pratiquement indépendant de cette tension de commande, pour autant bien sûr que cette dernière soit supérieure à celle qui est nécessaire pour que l'arête 13a de l'anneau 13 touche juste la face 2a du stator 2.

La valeur maximum de ce couple utile correspond donc à la tension maximum qui peut être appliquée entre ces électrodes 10 et ce rotor 3, c'est-à-dire, théoriquement, à la tension de claquage de la couche d'isolation 12.

En pratique, cette tension de commande est bien sûr inférieure à cette tension de claquage pour des raisons évidentes de sécurité.

Pendant la rotation du rotor 3, les moyens de liaison de son anneau 13 à son moyeu 9 sont évidemment soumis à un effort de flexion dirigé sensiblement dans le plan du rotor 3. Mais il est facile de déterminer les dimensions des divers composants de ces moyens de liaison de manière qu'ils ne risquent pas de casser en réponse à cet effort de flexion lorsque le moteur fournit son couple maximum.

Cet effort de flexion provoque évidemment une déformation de ces moyens de liaison, qui entraîne un décalage angulaire entre le moyeu 9 et l'anneau 13. Mais, dans la plupart des applications d'un micromoteur selon l'invention, ce décalage ne joue pas un grand rôle, et c'est pourquoi, comme cela a déjà été mentionné, les moyens de liaison de l'anneau 13 au moyeu 9 ne doivent pas obligatoirement présenter une grande résistance à la flexion dans le plan du rotor 3.

Le circuit de commande du moteur 1 dont le fonctionnement vient d'être décrit n'a pas été représenté par une figure car sa réalisation ne pose aucun problème à l'homme du métier. On notera simplement que si le moteur 1 est réalisé dans une plaquette de matériau semi-conducteur, ce circuit de commande peut facilement être réalisé dans la même plaquette et en même temps que ce moteur.

On considérera maintenant le cas où le rotor 3 du moteur 1 est aussi réalisé en un matériau conducteur, par exemple du silicium polycristallin, mais où le pivot 4 du stator 2 est en un matériau isolant, ou bien est en un matériau conducteur mais n'est pas relié à une des bornes de la source d'alimentation du dispositif.

Dans ce cas, le circuit de commande du moteur doit être agencé de manière à appliquer sélectivement et cycliquement une tension entre deux électrodes 10 adjacentes lorsque le moteur 1 doit fonctionner.

Admettons pour commencer que ces deux électrodes adjacentes sont les électrodes 10a et 10b.

Le champ électrique produit par la tension de commande appliquée entre ces bornes 10a et 10b s'étend dans une zone située de part et d'autre du plan de ces électrodes, et donc notamment dans l'espace séparant ces dernières de l'anneau 13 du rotor 3.

Ce champ électrique crée à son tour une force électrostatique qui tend à attirer la portion de l'anneau 13 située en regard des électrodes 10a et 10b contre ces dernières.

Si la tension appliquée à ces électrodes 10a et 10b est suffisante, l'anneau 13 bascule comme cela a été décrit ci-dessus et, également comme ci-dessus, un point de son arête 13a vient toucher la face 2a du stator 2. Mais dans ce cas, le point de contact est situé entre ces électrodes 10a et 10b.

Si maintenant le circuit de commande supprime la tension entre les électrodes 10a et 10b et applique simultanément une tension de même valeur entre les électrodes 10b et 10c, le point de contact entre l'arête 13a et la face 2a du stator 2 se déplace jusqu'à ce qu'il se trouve entre ces électrodes 10b et 10c.

Comme dans le premier cas décrit ci-dessus, l'arête 13a roule sans glisser sur la face 2a du stator pendant ce déplacement, à condition bien entendu que le couple résistant appliqué au rotor ne soit pas trop élevé, et que la tension de commande soit appliquée entre les électrodes 10b et 10c exactement à l'instant où elle est supprimée entre les électrodes 10a et 10b, voire même légèrement avant cet instant.

Ce processus peut évidemment être poursuivi, le circuit de commande du moteur appliquant ensuite la tension de commande successivement à chaque paire d'électrodes adjacentes 10c et 10d, 10d et 10e, etc, et l'arête 13a du rotor 3 roulant sur la face 2a du stator 2 comme cela a été décrit ci-dessus.

Egalement comme ci-dessus, ce roulement de l'arête 13a de l'anneau 13 sur la face 2a du stator 2 provoque une rotation du rotor 3 autour de son axe dans le sens de la rotation du point de contact de cette arête 13a sur cette face 2a.

De même, l'ordre dans lequel les paires d'électrodes adjacentes sont soumises à la tension de commande peut évidemment être inversé pour faire changer le sens de rotation du rotor 3.

Le circuit de commande permettant de faire fonctionner le moteur 1 de la manière qui vient d'être décrite n'a pas non plus été représenté car sa réalisation ne pose pas non plus de problème à l'homme du métier.

Il est évident que toutes les considérations faites ci-dessus sur les déformations subies par les moyens de liaison de l'anneau 13 au moyeu 9 et sur les avantages du moteur selon l'invention par rapport aux moteurs connus s'appliquent sans changement au cas qui vient d'être décrit.

On notera cependant que lorsque la tension de commande est appliquée à deux électrodes 10 adjacentes, comme cela vient d'être décrit, le rotor 3 est porté, par rapport à chacune de ces électrodes 10, à une tension sensiblement égale à la moitié de cette tension de commande. Il en résulte que cette dernière peut être environ deux fois plus élevée que dans le cas où le moteur 1 est commandé de la première manière décrite ci-dessus, puisque ce n'est que la moitié de la tension de commande qui doit être inférieure à la tension de claquage de la couche isolante 12. Il en résulte également que, toutes autres choses étant égales, le couple utile que peut fournir le moteur 1 est nettement plus élevé lorsqu'il est commandé de la manière qui vient d'être décrite.

## Revendications

1. Micromoteur électrostatique (1) comportant un rotor (3) ayant un moyeu (9), une zone périphérique (13) et des moyens de liaison mécanique de ladite zone périphérique audit moyeu, un stator (2) comprenant des électrodes (10) coplanaires disposées en regard de ladite zone périphérique (13) et destinées à produire un champ électrique entre ledit stator (2) et ledit rotor (3), et des moyens (4) pour relier rotativement ledit moyeu (9) du rotor (3) audit stator (2), caractérisé par le fait que ladite zone périphérique (13) est constituée par un anneau (13) sensiblement plan et parallèle au plan desdites électrodes (10) en l'absence dudit champ électrique et recouvrant au moins partiellement lesdites électrodes (10) dans une vue en plan dudit moteur (1), et que lesdits moyens de liaison mécanique (14; 15; 16, 17, 18) sont déformables élastiquement en réponse à une force appliquée audit anneau (13) dans une direction sensiblement perpendiculaire audit plan desdites électrodes (10), ledit moyeu (9), ledit anneau (13) et lesdits moyens de liaison mécanique (14; 15; 16, 17, 18) étant distincts les uns des autres et définissant entre eux des ouvertures traversant ledit rotor.

2. Micromoteur selon la revendication 1, caractérisé par le fait que lesdits moyens de liaison mécanique (14; 15; 16, 17, 18) comportent un bras rectiligne (14) disposé selon un rayon dudit rotor (3).

3. Micromoteur selon la revendication 1, caractérisé par le fait que lesdits moyens de liaison mécanique (14; 15; 16, 17, 18) comportent un bras (15) comprenant deux portions (15a, 15b) disposées selon un rayon dudit rotor (3) et reliées l'une à l'autre par une pluralité de portions (15c, 15d, 15e, 15f, 15g) alternativement perpendiculaires et parallèles audit rayon.

4. Micromoteur selon la revendication 1, caractérisé par le fait que lesdits moyens de liaison mécanique (14; 15; 16, 17, 18) comportent un premier bras (17) ayant une première extrémité reliée audit anneau (13) et disposé selon un premier rayon dudit rotor (3), un deuxième bras (18) ayant une première extrémité reliée audit moyeu (9) et disposé selon un deuxième rayon dudit rotor, et un élément de liaison (16) relié à la deuxième extrémité dudit premier bras (17) et à la deuxième extrémité dudit deuxième bras (18).

## Patentansprüche

1. Elektrostatischer Mikromotor (1) mit einem eine Nabe (9), eine periphere Zone (13) und mechanische Verbindungsmittel der peripheren Zone mit der Nabe aufweisenden Rotor (3), mit einem Stator (2), der koplanar gegenüber der peripheren Zone (13) angeordnete Elektroden (10), bestimmt zum Erzeugen eines elektrischen Feldes zwischen dem Stator (2) und dem Rotor (3) umfaßt und mit Mitteln (4) zum drehbeweglichen Verbinden der Nabe (12) des Rotors (3) mit dem Stator (2), dadurch gekennzeichnet, daß die periphere Zone (13) von einem Ring (13) gebildet wird, der im wesentlichen eben und parallel zur Ebene der Elektroden (10) bei Fehlen des elektrischen Feldes ist und mindestens teilweise die Elektroden (10) in einer Draufsicht auf den Motor (1) überdeckt und daß die mechanischen Verbindungsmittel (14; 15; 16, 17, 18) elastisch deformierbar sind in Reaktion auf eine auf den Ring (13) in einer Richtung im wesentlichen senkrecht auf die Ebene der Elektroden (10) wirkende Kraft, wobei die Nabe (9), der Ring (13) und die mechanischen Verbindungsmittel (14; 15; 16, 17, 18) voneinander abgesetzt sind und zwischeneinander den Rotor durchsetzende Öffnungen begrenzen.

2. Mikromotor nach Anspruch 1, dadurch gekennzeichnet, daß die mechanische Verbindungsmittel (14; 15; 16, 17, 18) einen geraden Arm (14) umfassen, der in einem Radius des Rotors (3) angeordnet ist.

3. Mikromotor nach Anspruch 1, dadurch gekennzeichnet, daß die mechanischen Verbindungsmittel (14; 15; 16, 17, 18) einen Arm (15) umfassen mit zwei Abschnitten (15a, 15b), die längs eines Radius des Rotors (3) verlaufen und miteinander verbunden sind über eine Mehrzahl von Abschnitten (15c, 15d, 15e, 15f, 15g), die alternierend senkrecht und parallel zu dem genannten Radius verlaufen.

4. Mikromotor nach Anspruch 1, dadurch gekennzeichnet, daß die mechanischen Verbindungsmittel (14; 15; 16, 17, 18) einen ersten Arm (17) umfassen, der mit einem ersten Ende mit dem Ring (13) verbunden ist und längs eines ersten Radius des Rotors (3) verläuft, einen zweiten Arm (18), der mit einem ersten Ende mit der Nabe (9) verbunden ist und längs eines zweiten Radius des Rotors verläuft, und ein Verbindungselement (16) umfassen, das das zweite Ende des ersten Armes (17) und das zweite Ende des zweiten Armes (18) verbindet.

**Claims**

1. Electrostatic micromotor (1) comprising a rotor (3) having a hub (9), a peripheral region (13) and means for mechanically connecting said peripheral region to said hub, a stator (2) including coplanar electrodes (10) disposed opposite said peripheral region (13) and adapted to produce an electric field between said stator (2) and said rotor (3), and means (4) for rotatably connecting said hub (9) of rotor (3) to said stator (2), characterized in that said peripheral region (13) is formed by a substantially planar ring (13) substantially parallel to the plane of said electrodes (10) in the absence of said electric field and covering at least partially said electrodes (10) in a plan view of said motor (1), and in that said mechanically connecting means (14; 15; 16, 17, 18) are elastically deformable in response to a force applied to said ring (13) in a direction substantially perpendicular to said plane of said electrodes (10), said hub (9), said ring (13) and said mechanically connecting means (14; 15; 16, 17, 18) being distinct from each other and defining between them openings extending through said rotor.

2. Micromotor according to claim 1, characterized in that said mechanically connecting means (14; 15; 16, 17, 18) include a rectilinear arm (14) extending along a radius of said rotor (3).

3. Micromotor according to claim 1, characterized in that said mechanically connecting means (14; 15; 16, 17, 18) include an arm (15) having two portions (15a, 15b) extending along a radius of said rotor (3) and connected to one another by a plurality of portions (15c, 15d, 15e, 15f, 15g) alternately perpendicular and parallel to said radius.

4. Micromotor according to claim 1, characterized in that said mechanically connecting means (14; 15; 16, 17, 18) include a first arm (17) having a first extremity connected to said ring (13) and extending along a first radius of said rotor (3), a second arm (18) having a first extremity connected to said hub (9) and extending along a second radius of said rotor, and a linking element (16) connected to the second extremity of said first arm (17) and to the second extremity of said second arm (18).

11a  10a  1  14  6  7  7a  4  8  5  14  3  13  2a
          13                                              13a
                                                          12
                                                          11i
                        2
                        10i

# Fig.1

11d        11e        11f        11g        11h

11c

10d   10e    10f

10c            10g

11b
        10b              10h

11a
        10a

A                                                    A

10i              11i

10p
                                        10j
11p                              10k

10o
        10n  10m      10l
11o

                                              11j

19  11n      11m      11l      11k

# Fig.2

10

EP 0 441 269 B1

Fig. 3

Fig. 4

Fig.5

Fig.6